# EUROPEAN PATENT APPLICATION

(11) **EP 4 826 617 A1**
(43) Date of publication of application: **21.10.2026**
(21) Application number: 25300044.2
(22) Date of filing: 15.04.2025
(51) Int. Cl.: G06Q 10/0637, G06Q 10/0639

(54) **PERSONALIZED COMPUTER-IMPLEMENTED APPLICATION**

(71) Applicant: Siemens Aktiengesellschaft, 80333 München (DE)
(72) Inventor: Röse, Kerstin, 91056 Erlangen (DE); Petridis, Filippos, 10585 Berlin (DE); Joosten, Jan, 91301 Forchheim (DE); Schumm, Bernhard, 81927 Munich (DE)
(74) Representative: Siemens Patent Attorneys

(57) **Abstract**

The disclosure relates to a method for providing a personalized computer-implemented application,
comprising the steps:
- providing (S1) a computer-implemented application,
- receiving (S2) a user goal,
- receiving (S5) a set of metrics corresponding to the user goal, and
- providing (S6) the personalized computer-implemented application by implementing the set of metrics into the computer-implemented application.

Further a computer program product, a computer-readable storage medium, a device, and a system are disclosed.

## Description

Independent of the grammatical term usage, individuals with male, female or other gender identities are included within the term.

### DESCRIPTION

### Field of the Invention

The disclosure relates to a method for providing a personalized computer-implemented application.

Further a computer program product, a computer-readable storage medium, a device, and a system are disclosed.

### Background of the Invention

Product teams in the B2B sector often struggle to identify and select user experience (UX) metrics to understand and enhance user engagement with their products to meet specific goals in specific application fields. Numerous research methods and UX metrics are available for UX research. The fundamental challenge lies in selecting the best approach - the best combination of UX metrics - to yield the most valuable data and insights for informed decision-making and drive significant usability, efficiency, faulty tolerance, and UX impact.

Furthermore, existing frameworks are limited in their adaptability to different application fields and user targets, not able to recommend different selections of UX metrics for different use cases.

Existing UX metric choice depends heavily on the UX maturity of the respective company and its teams. Currently, product teams in B2B pick their UX metrics based on subjective prioritization or previous experience with UX research. Moreover, they can use frameworks that cover a selection of UX metrics, for example, the HEART framework or the CASTLE framework. Both frameworks were developed for different purposes.

The HEART framework, developed by Google, proposes measuring UX through five key dimensions: Happiness, Engagement, Adoption, Retention, and Task success. It helps product teams align UX goals with product success by tracking user satisfaction and engagement over time. The framework was developed especially for web applications and focuses on user-centric metrics. (Rodden, K., Hutchinson, H., & Fu, X. (2010, April). Measuring the user experience on a large scale: user-centered metrics for web applications. In Proceedings of the SIGCHI conference on human factors in computing systems (pp. 2395-2398))

The HEART framework works well for B2C products but is inadequate for workplace applications where users cannot select the product. This is why CASTLE was developed. (Laubheimer, P. (2023). CASTLE Framework for Productivity/Workplace Applications. Nielsen Norman Group. https://www.nngroup.com/articles/castle-framework/)

The CASTLE framework, developed by Nielsen Norman Group, is designed to assess the user experience of workplace applications where users must use the product as part of their job. CASTLE stands for Cognitive Load, Advanced Feature Usage, Satisfaction, Task Efficiency, Learnability, and Errors. This framework addresses aspects of user experience that are relevant in professional settings, focusing on how effectively users can perform their tasks using the application. (Laubheimer, P. (2023). CASTLE Framework for Productivity/Workplace Applications. Nielsen Norman Group. https://www.nngroup.com/articles/castle-framework/)

Both frameworks are very static in terms of metrics they include. They cannot adapt flexibly to different application fields or different business targets, only defining one selection of metrics, not able to adapt to the use case and recommend unique metric mixes.

Accordingly, there is a need for a method providing support to reach specific user goals.

### Summary

Embodiments herein generally relate to a method for providing a personalized computer-implemented application.

In one embodiment, a method for providing a personalized computer-implemented application is disclosed, the method including the steps of:
- providing a computer-implemented application,
- receiving a user goal,
- receiving a set of metrics corresponding to the user goal, and
- providing the personalized computer-implemented application by implementing the set of metrics into the computer-implemented application.

According to the embodiments a computer-implemented application personalized according to a user goal is provided.

In a further embodiment receiving the user goal comprises receiving multiple, e.g. at least two, user goals.

In a further embodiment the user goal comprises:
- Task success, and/or
- adoption, and/or
- customer success, and/or
- customer satisfaction, and/or
- cost savings, and/or
- time savings, and/or
- performance, and/or
- efficiency, and/or
- effectiveness, and/or
- error tolerance, and/or
- reliability, and/or
- risk reduction, and/or
- increasing customer value, and/or
- increasing market fit, and/or
- optimize system, and/or
- minimize costs, and/or
- improve task efficiency, and/or
- accelerate time-to-market, and/or
- improve customer satisfaction, and/or
- improve product quality, and/or
- increase portfolio profitability,
each while using the personalized computer-implemented application.

In a further embodiment the personalized computer-implemented application is arranged to support reaching the user goal.

In a further embodiment the set of metrics corresponds at least one of the following metrics:
- uncertainty perception, and/or
- stakeholder management, and/or
- know user group, and/or market fit, and/or customer value proposition, and/or
- mental workload, and/or
- human factors, and/or
- map to mental models, and/or
- ergonomics, and/or
- accessibility management, and/or
- time on task, and/or
- time on site, and/or
- number of events, and/or
- number of steps, and/or
- system error rate, and/or
- number service request, and/or
- call center traffic, and/or
- system response time, and/or
- system resources needed (SUX), and/or
- training time needed, and/or
- training budget needed, and/or
- time-to-decision, and/or
- time-to-market, and/or
- hours spent on data interpretation, and/or
- number of user experience (UX) redesigns, and/or
- components reuse, and/or
- onboarding time, and/or
- task completion time (TCT), and/or
- task completion rate (TCR), and/or
- task success rate, and/or
- user error count, and/or
- pragmatic usability rating by experts (PURE), and/or
- crash rate, and/or
- number of visits over time, and/or
- number of unique users, and/or
- signup rates, and/or
- revenue, and/or
- number of visitor, and/or
- conversion rate, and/or
- download rate, and/or
- system usability score (SUS), and/or
- simplicity score, and/or
- customer satisfaction (CSAT), and/or
- churn rate, and/or
- voice-of-expert (VoE), and/or
- UMUX (ease of use), and/or
- usefulness, and/or
- number of complaint, and/or
- number of issues, and/or
- number of customer support tickets, and/or
- 5-star reviews, and/or
- net promoter score (NPS), and/or
- conversion rate.

In a further embodiment the metrics are arranged as quantitative measures of a user experience (UX) provided by the computer-implemented application and the personalized computer-implemented application.

In a further embodiment the method comprises the additional steps of:
- providing a list of optional sets of metrices corresponding to the user goal,
- receiving a user input comprising a selection out of the list of optional sets of metrices,
- wherein the receiving of the set of metrics is based on the selection.

In a further embodiment the method comprises the additional step of receiving corresponding to the user goal:
- an information on an industry domain and/or
- an information on an application field,
wherein the received set of metrics corresponds additional to the industry domain and/or the application field.

In a further embodiment the provided list of optional sets of metrices corresponds additional to the industry domain and/or the application field.

In a further embodiment the computer-implemented application and the personalized computer-implemented application are a software running on a smart device and/or on a computational device.

In a further embodiment the personalized computer-implemented application is a unique version provided to the user supporting the user goal.

According to a further embodiment computer program product is provided. The computer program product comprising instructions which, when the program is executed by the computational device, cause the computational device to carry out the steps of the method according to the invention.

According to a further embodiment computer-readable storage medium is provided. The computer-readable storage medium comprising instructions which, when executed by the computational device, cause the computational device to carry out the steps of the method according to the invention.

According to a further embodiment a device is provided. The device containing a computer program product according to the invention und/or a computer-readable storage medium according to the invention.

According to a further embodiment a system is provided. The system comprising:
- several, e.g. at least two deceives according to the invention,
- a network component, and
- a device management component.

The invention provides numerous advantages:
- Efficient and targeted method selection
   o Speed up insights collection
   o Speed up product team reaction times
   o Speed up business impact
   o Cost-saving (no unnecessary UX metrics, clearly defined targets and insight collection)
- Enables teams to focus on either product performance or user performance (and in combination)
   o The UX KPI Framework Tool is multidimensional in metric selection, includes product-performance metrics and/or user-centric metrics for optimal results
- Enhanced Decision-Making (from a business perspective):
   o Provides product teams with data that align UX improvements with business outcomes
   o Facilitates prioritization of features and enhancements based on potential business impact
- Customization and Flexibility:
   o Allows for adaptation to rapidly changing business environments
   o Supports various product formats and platforms (e.g., web, mobile, on-premises, ...), offering flexibility and a wide range of applicability
- Scalability across Industries:
   o Can be applied across multiple industries (e.g., engineering, manufacturing, healthcare, finance, ...), enabling industry-specific UX insights
   o Easily scalable to accommodate growing organizations and product portfolios
- Alignment with Business KPIs:
   o Directly links UX efforts to organizational goals such as portfolio profitability, market fit, and customer satisfaction
   o Drives alignment between UX teams, product management, and executives (leaders)
- Risk Mitigation:
   o Reduces the risk of pursuing misaligned strategies or investing in less relevant UX metrics (avoids high opportunity costs)
- Time-to-Market Reduction:
   o Accelerates development cycles by focusing on critical user and business metrics
   o Enables quicker iteration loops based on precise UX metrics, reducing overall time-to-market
- Competitive Advantage:
   o Helps businesses stay ahead speeding up method selection, optimizing UX research processes
- Resource Optimization:
   o Optimizes resource allocation by focusing only on metrics that deliver business value
   o Allocates budget and personnel more effectively by eliminating unnecessary UX
   activities

It is to be understood that the elements and features recited in the appended claims may be combined in different ways to produce new claims that likewise fall within the scope of the present invention. Thus, whereby the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

### Brief Description of the Drawings

- Fig. 1: diagram of UX categories that the UX KPI Framework Tool can use to define relevant UX metrics,
- Fig. 2: shows a set of UX metrics relevant per UX dimension that the UX KPI Framework may recommend,
- Fig. 3: shows a pathway how the UX KPI Framework Tool would recommend a metric mix of different UX categories, and
- Fig. 4: shows a flow-diagram of a method for providing a personalized computer-implemented application.

### Detailed Description of the Drawings

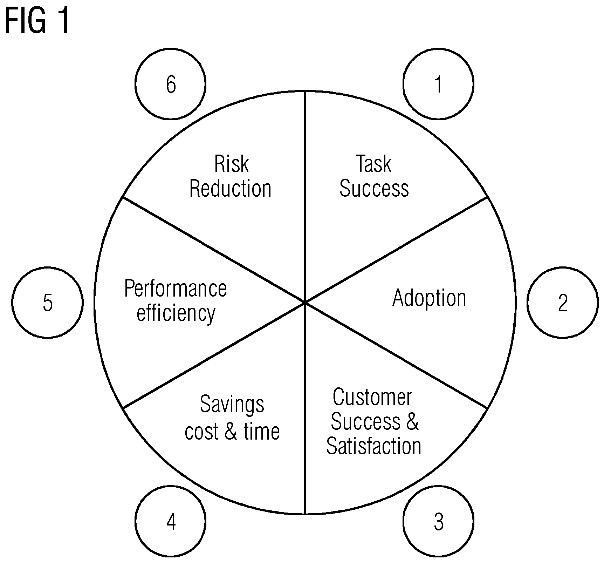

Fig. 1 to Fig. 3 show an exemplary method for providing a personalized computer-implemented application,
comprising the steps:
- providing a computer-implemented application,
- receiving a user goal,
- receiving a set of metrics corresponding to the user goal, and
- providing the personalized computer-implemented application by implementing the set of metrics into the computer-implemented application.

The exemplary method uses a UX KPI Framework Tool. The UX KPI Framework Tool effectively bridges the gap between business targets and UX metrics by offering a multidimensional approach tailored to the unique challenges of different B2B application fields.

The UX KPI Framework Tool proposes the best UX metric selection to drive business success by aligning user-centric metrics with product performance metrics, depending on the unique use case and business goal. This can assist product teams in achieving specific business targets. For example, business targets may include minimizing costs and increasing portfolio profitability.

Figure 1 is an exemplary depiction of possible UX categories that the UX KPI Framework Tool can use to define relevant UX metrics to achieve specific business goals divided according to Figure 1 into the following categories:
- Task Success
- Adoption
- Customer Success & Satisfaction
- Savings (cost & time)
- Performance (efficiency)
- Risk Reduction

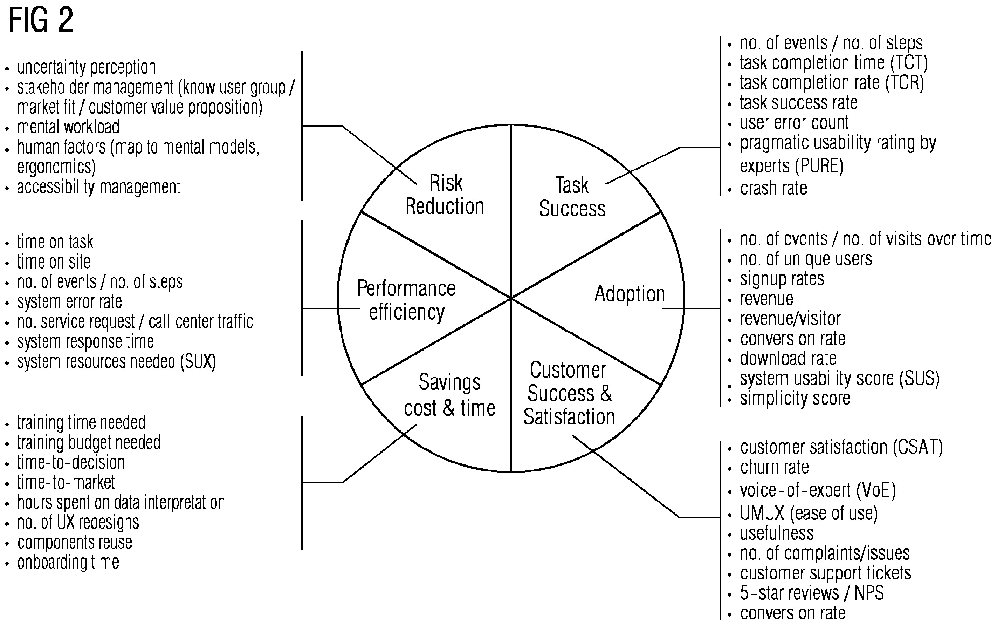

Figure 2 shows is an exemplary set of UX metrics (overlap of metrics is possible) relevant per UX dimension (= category) that the UX KPI Framework may recommend, depending on the unique use case.

The UX KPI Framework Tool can assist product owners, project managers, and UX researchers with specific business KPIs and strategic goals for their business's success in specific UX metrics selection that will drive success on both the user and product performance sides, ultimately achieving business impact.

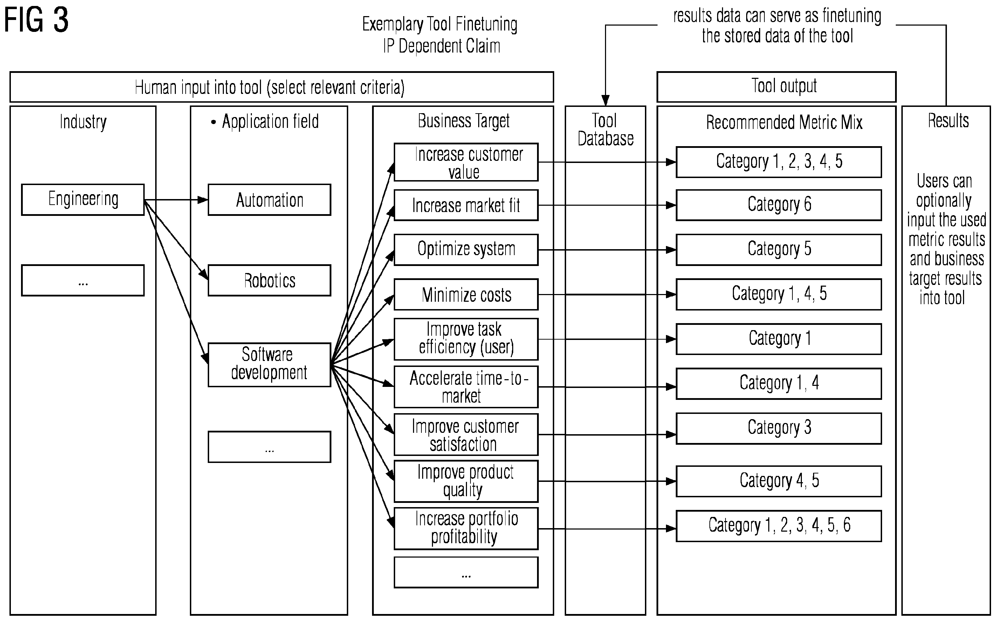

The UX KPI Framework Tool is able to recommend different UX metric selections based on the unique application field and business target of the respective product owners. Figure 3 shows an exemplary pathway how the UX KPI Framework Tool would recommend a metric mix of different UX categories with UX metrics based on different user goals like:
- Increasing customer value
- Increasing market fit
- Optimize system
- Minimize costs
- Improve task efficiency
- Accelerate time-to-market
- Improve customer satisfaction
- Improve product quality
- Increase portfolio profitability

For example, a product owner of product X could enter into the tool: 1) industry, 2) application field, and 3) business target. The tool would then recommend a combination of UX categories and respective UX metrics that should be measured to collect the best possible insights for efficiently achieving the respective business target.

Afterwards, the personalized amendment of product (software) according to recommendation of combination of UX categories and respective UX metrics is provided.

### Example Scenario: Selecting UX Metrics for cost reduction in software development

A product owner in the engineering industry aims to reduce costs for their software product. To achieve this, they need relevant UX metrics to inform data-driven updates. Instead of relying on subjective or poorly suited metrics found online, the product owner utilizes this specialized tool designed for selecting effective UX metrics.

### UX Performance TRACS Tool:

Tool Input
1. Specify Industry: Select "Engineering"
2. Specify Application Field: Select "Software Development"
3. Specify Business Target: Select "Minimize Costs"

### Tool Database

The tool utilizes a comprehensive database containing UX research from various industries and application fields. It uses validated criteria to recommend a unique set of UX metrics specifically aligned with the product owner's goal of cost reduction in software development.

### Tool output: Recommended UX metrics within categories

For example, the tool recommends categories 1, 4, and 5 (Task Success, Savings, and Performance) to the product owner. Within these categories, the tool can recommend a few UX metrics. For example:
1. Task Success: UX metric "task completion time" to understand efficiency
2. Savings: UX metric "training time needed" to assess cost reductions
3. Performance: UX metric "the number of steps" and "system error rate"

By applying these metrics, the product owner can conduct thorough UX research. The insights gained will guide strategic updates, enhancing value propositions while minimizing the risk of product failures.

Optional post-research step (dependent claim):
After completing the research, the product owner has the option to share the implemented UX metrics and the respective UX metric and business KPI results. This contribution can help refine and expand the tool's database, ensuring it continues to provide adaptive and validated guidance in the future.

This structured approach empowers the product owner to make informed decisions that align with their primary objective of reducing costs - ultimately leading to more streamlined design processes and efficient resource allocation.

This also helps avoid the high costs of implementing incorrect UX metrics, which can lead to weak insights and, ultimately, product failures.

The existing frameworks (like HEART/CASTLE) do not contain any business-specific categories and thus do not align directly with business-specific KPIs in the B2B space. Product teams and UX researchers must self-select metrics proposed by these static frameworks, regardless of unique business targets and lean heavily on personal UX experience. This can be bias and may cause product teams to select the wrong UX metrics for their specific business target within a specific application field.

In contrast, the UX KPI Framework Tool aims to bridge the gap between strategic business targets and the relevant and necessary UX metrics required to drive impact successfully for each specific use case in the respective application field. Product teams can input specific use case information into the UX KPI Framework Tool, e.g. application field (industry-specific), business target (KPI specific) and product-specific information (web, on-premises, etc.). The Tool, Al-driven, will intuitively recommend the best UX metric mix that product teams should measure to specifically understand and drive data-driven design for their specific products.

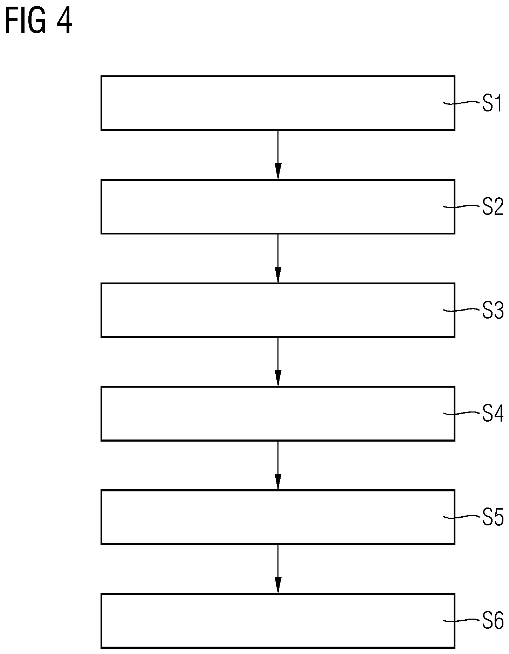

Fig. 4 shows a flow-diagram of a method for providing a personalized computer-implemented application,
comprising the steps:
- Step S1: providing a computer-implemented application,
- Step S2: receiving a user goal,
- Step S3: providing a list of optional sets of metrices corresponding to the user goal,
- Step S4: receiving a user input comprising a selection out of the list of optional sets of metrices,
- Step S5: receiving a set of metrics corresponding to the user goal, wherein the receiving of the set of metrics is based on the selection, and
- Step S6: providing the personalized computer-implemented application by implementing the set of metrics into the computer-implemented application.

Although the invention has been explained in relation to its advantageous embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A method for providing a personalized computer-implemented application,
comprising the steps:
- providing (S1) a computer-implemented application,
- receiving (S2) a user goal,
- receiving (S5) a set of metrics corresponding to the user goal, and
- providing (S6) the personalized computer-implemented application by implementing the set of metrics into the computer-implemented application.

2. Method according to claim 1,
wherein receiving the user goal comprises receiving multiple user goals.

3. Method according to one of the previous claims,
wherein the user goal comprises:
- Task success, and/or
- adoption, and/or
- customer success, and/or
- customer satisfaction, and/or
- cost savings, and/or
- time savings, and/or
- performance, and/or
- efficiency, and/or
- effectiveness, and/or
- error tolerance, and/or
- reliability, and/or
- risk reduction, and/or
- increasing customer value, and/or
- increasing market fit, and/or
- optimize system, and/or
- minimize costs, and/or
- improve task efficiency, and/or
- accelerate time-to-market, and/or
- improve customer satisfaction, and/or
- improve product quality, and/or
- increase portfolio profitability,
each while using the personalized computer-implemented application.

4. Method according to one of the previous claims,
wherein the personalized computer-implemented application is arranged to support reaching the user gaol.

5. Method according to one of the previous claims,
wherein the set of metrics corresponds at least one of the following metrics:
- uncertainty perception, and/or
- stakeholder management, and/or
- know user group, and/or market fit, and/or customer value proposition, and/or
- mental workload, and/or
- human factors, and/or
- map to mental models, and/or
- ergonomics, and/or
- accessibility management, and/or
- time on task, and/or
- time on site, and/or
- number of events, and/or
- number of steps, and/or
- system error rate, and/or
- number service request, and/or
- call center traffic, and/or
- system response time, and/or
- system resources needed (SUX), and/or
- training time needed, and/or
- training budget needed, and/or
- time-to-decision, and/or
- time-to-market, and/or
- hours spent on data interpretation, and/or
- number of user experience (UX) redesigns, and/or
- components reuse, and/or
- onboarding time, and/or
- task completion time (TCT), and/or
- task completion rate (TCR), and/or
- task success rate, and/or
- user error count, and/or
- pragmatic usability rating by experts (PURE), and/or
- crash rate, and/or
- number of visits over time, and/or
- number of unique users, and/or
- signup rates, and/or
- revenue, and/or
- number of visitor, and/or
- conversion rate, and/or
- download rate, and/or
- system usability score (SUS), and/or
- simplicity score, and/or
- customer satisfaction (CSAT), and/or
- churn rate, and/or
- voice-of-expert (VoE), and/or
- UMUX (ease of use), and/or
- usefulness, and/or
- number of complaint, and/or
- number of issues, and/or
- number of customer support tickets, and/or
- 5-star reviews, and/or
- net promoter score (NPS), and/or
- conversion rate.

6. Method according to one of the previous claims,
wherein the metrics are arranged as quantitative measures of a user experience (UX) provided by the computer-implemented application and the personalized computer-implemented application.

7. Method according to one of the previous claims,
with the additional steps of:
- providing (S3) a list of optional sets of metrices corresponding to the user goal,
- receiving (S4) a user input comprising a selection out of the list of optional sets of metrices,
wherein the receiving (S5) of the set of metrics is based on the selection.

8. Method according to one of the previous claims,
with the additional step of receiving (S2) corresponding to the user goal:
- an information on an industry domain and/or
- an information on an application field,
wherein the received set of metrics corresponds additional to the industry domain and/or the application field.

9. Method according to claims 7 and 8,
wherein the provided list of optional sets of metrices corresponds additional to the industry domain and/or the application field.

10. Method according to one of the previous claims,
wherein the computer-implemented application and the personalized computer-implemented application are a software running on a smart device and/or on a computational device.

11. Method according to one of the previous claims,
wherein the personalized computer-implemented application is a unique version provided to the user supporting the user goal.

12. A computer program product comprising instructions which, when the program is executed by the computational device, cause the computational device to carry out the steps of the method according to one of the claims 1 to 11.

13. A computer-readable storage medium comprising instructions which, when executed by the computational device, cause the computational device to carry out the steps of the method according to one of the claims 1 to 11.

14. Device containing a computer program product according to claim 12 und/or a computer-readable storage medium according to claim 13.

15. System comprising:
- several devices according to claim 14,
- a network component, and
- a device management component.
